# EUROPEAN PATENT APPLICATION

(11) **EP 3 757 135 A1**
(43) Date of publication of application: **30.12.2020**
(21) Application number: 19758120.0
(22) Date of filing: 22.02.2019
(51) Int. Cl.: C08B 31/06, A21D 2/18, A21D 13/00, A21D 13/80, A23G 3/34, A23L 7/109, A23L 29/219, A23L 33/21

(54) **STARCH WITH HIGH DIETARY FIBER CONTENT SUITABLY USABLE IN FOODS AND BEVERAGES**

(30) Priority: 22.02.2018 JP 2018030094
(71) Applicant: SANWA STARCH CO., LTD., Kashihara-shi, Nara 634-8585 (JP)
(72) Inventor: NAKAMOTO Hideaki, Kashihara-shi, Nara 634-8585 (JP); OTSUBO Kyoko, Kashihara-shi, Nara 634-8585 (JP)
(74) Representative: Müller-Boré & Partner Patentanwälte PartG mbB
(86) International application number: PCT/JP2019/006885
(87) International publication number: WO 2019/163965

(57) **Abstract**

The present invention provides a starch with high dietary fiber content that does not deteriorate texture or flavor when added to a food. Provided is a phosphoric acid crosslinked starch obtained by subjecting a starting starch material to a phosphoric acid crosslinking treatment, wherein: when suspended in water to give a concentration of 7% by weight on the anhydrous basis, the starting starch material shows a gelatinization starting temperature of 80°C or lower; in the phosphoric acid crosslinked starch, 70% by volume or more of particles have a particle diameter of 18-35 µm; and the content of dietary fiber in the phosphoric acid crosslinked starch is 50% by weight or greater. The phosphoric acid crosslinked starch according to the present invention is useful in manufacturing compositions for dietary fiber enrichment, foods for restricting carbohydrate intake or low calorie foods.

## Description

### [Technical Field]

The present invention relates to a starch with high dietary fiber content and a food and beverage product containing a starch with high dietary fiber content.

### [Background Art]

Dietary fiber is the generic term for indigestible components in food that are not digested by digestive enzymes of humans. It has been reported that dietary fiber has many physiological functions, such as suppression of elevated blood sugar levels and reduction of cholesterol concentration in blood. Recently years have seen an increase in patients having, or at risk of having, lifestyle diseases including diabetes, thus increasing the importance of dietary fiber intake. Meanwhile, many people are unable to reach the target amount of dietary fiber intake, such that there is a demand for a food product, which enables convenient intake of a large amount of dietary fiber.

Dietary fiber includes insoluble dietary fiber and water-soluble dietary fiber. Utilization of water-soluble fiber in food processing faces problems such as complexity of the manufacture process, poor handling during manufacture of a food product, and reduced dietary fiber content in a food product due to outflow of dietary fiber during processing. For this reason, insoluble dietary fiber is considered suitable for food products such as bread and noodles.

Ingredients containing a large amount of insoluble dietary fiber include wheat bran and okara. While technologies that utilize such ingredients in bread (Patent Literature 1, Non Patent Literature 1) have been proposed, such technologies face problems such as strong odor or taste unique to the ingredient or deterioration of flavor/texture when added to a food product.

### [Citation List]

### [Patent Literature]

[PTL 1] Japanese Laid-Open Publication No. 2015-097500

### [Non Patent Literature]

[NPL 1] Yoshie TSUDA and two others, "Faiba Bureddo heno Okara no Riyo" [Use of Okara in Fiber Bread], Journal of cookery science of Japan, The Japan Society of Cookery Science, February 17, 1995, Vo. 29, No. 1, p. 25-31

### [Summary of Invention]

### [Solution to Problem]

The present invention provides a starch with high dietary fiber content, which has phosphorus content suitable for use in food products without any deterioration in texture/flavor.

As a result of diligent study, the inventors completed the present invention by finding that a distarch phosphate with high dietary fiber content and suitable phosphorus content suitable for use in a food product without an adverse effect on texture/flavor when added to a food product can be manufactured by phosphate crosslinking a raw material starch, which exhibits a specific particle size distribution and has a gelatinization starting temperature of 80°C or lower when the raw material starch is suspended in water so that the raw material starch would be 7% by weight on a dry basis.

Specifically, the present invention provides a distarch phosphate obtained by applying phosphate crosslinking treatment on a raw material starch, wherein a gelatinization starting temperature is 80°C or lower when the raw material starch is suspended in water so that the raw material starch would be 7% by weight on a dry basis, 70% or more of the distarch phosphate has a particle size of 18 to 35 µm based on volume, and dietary fiber content in the distarch phosphate is 50% or greater based on weight. Beverages and food products can be produced with high dietary fiber content without diminishing the texture/flavor by using such a distarch phosphate in beverages and food products.

The present invention provides, for example, the following means to achieve the objectives described above.
(Item 1)
   A distarch phosphate obtained by applying phosphate crosslinking treatment on a raw material starch, wherein
   a gelatinization starting temperature is about 80°C or lower in RVA viscosity measurement when the raw material starch is suspended in water so that the raw material starch would be 7% by weight on a dry basis,
   about 70% or more of the distarch phosphate has a particle size of 18 to 35 µm based on volume, and
   dietary fiber content in the distarch phosphate is about 50% or greater based on weight.
(Item 2)
   A distarch phosphate obtained by applying phosphate crosslinking treatment on a raw material starch, wherein
   about 70% or more of the raw material starch has a particle size of 18 to 35 µm based on volume,
   a gelatinization starting temperature is about 80°C or lower in RVA viscosity measurement when the raw material starch is suspended in water so that the raw material starch would be 7% by weight on a dry basis, and
   dietary fiber content in the distarch phosphate is about 50% or greater based on weight.
(Item 3)
   The distarch phosphate of item 1 or 2, wherein the raw material starch is obtained from a leguminous plant.
(Item 4)
   A distarch phosphate obtained by applying phosphate crosslinking treatment on a leguminous plant starch, wherein
   dietary fiber content in the distarch phosphate is about 50% or greater based on weight.
(Item 5)
   A distarch phosphate obtained by applying phosphate crosslinking treatment on a leguminous plant starch, wherein
   about 70% or more of the distarch phosphate has a particle size of 18 to 35 µm based on volume, and
   dietary fiber content in the distarch phosphate is about 50% or greater based on weight.
(Item 6)
   The distarch phosphate of any one of items 1 to 5, wherein the raw material starch or the leguminous plant starch is obtained from a pea or a mung bean.
(Item 7)
   The distarch phosphate of any one of items 1 to 6, wherein phosphorus content of the distarch phosphate by weight is about 0.5% or less.
(Item 8)
   The distarch phosphate of any one of items 1 to 7, wherein phosphorus content of the distarch phosphate by weight is about 0.1% or greater.
(Item 9)
   The distarch phosphate of any one of items 1 to 8, wherein a maximum viscosity of an RVA viscosity is about 200 mPa·s or less when the raw material starch is suspended in water so that the raw material starch would be 25% by weight on a dry basis.
(Item 10)
   A dietary fiber supplementing composition comprising the distarch phosphate of any one of items 1 to 9.
(Item 11)
   A composition comprising the distarch phosphate of any one of items 1 to 9, for manufacturing a sugar restricted food product.
(Item 12)
   A composition comprising the distarch phosphate of any one of items 1 to 9, for manufacturing a low calorie food product.
(Item 13)
   A composition comprising the distarch phosphate of any one of items 1 to 9, for use as a substitute for a native starch or a modified starch other than a distarch phosphate.
(Item 14)
   A composition comprising the distarch phosphate of any one of items 1 to 9, for use as a substitute for a wheat derived distarch phosphate.
(Item 15)
   A composition for manufacturing a dietary fiber supplemented food product without diminishing texture or flavor of a food product, wherein the composition comprises the distarch phosphate of any one of items 1 to 9, and wherein texture or flavor is improved when a food product is manufactured using the composition compared to a food product manufactured using a wheat derived distarch phosphate.
(Item 16)
   A composition comprising the distarch phosphate of any one of items 1 to 9 for use in a food product comprising a carbohydrate as a primary component as a substitute for at least some of the carbohydrate.
(Item 17)
   A method for manufacturing the distarch phosphate of any one of items 1 to 9 or the composition of any one of items 10 to 15, the method comprising forming a distarch phosphate by phosphate crosslinking of the raw material starch or the leguminous plant starch in the presence of a phosphate crosslinker and a salt.
(Item 18)
   The method of item 17, wherein the phosphate crosslinker is selected from the group consisting of sodium trimetaphosphate and phosphorus oxychloride.
(Item 19)
   The method of item 17 or 18, wherein the salt is selected from the group consisting of sodium chloride and sodium sulfate.
(Item 20)
   The method of any one of items 17 to 19, wherein the forming the distarch phosphate comprises mixing the raw material starch or the leguminous plant starch with water to adjust a pH of the mixture to from about 9 to about 12.
(Item 21)
   The method of item 20, wherein the pH is a pH of about 10.5 to about 11.5.
(Item 22)
   A food product manufactured by using the distarch phosphate of any one of items 1 to 9.
(Item 23)
   The food product of item 22, wherein the food product is a baked confectionary, bread, or noodles.
(Item 24)
   The food product of item 22 or 23, wherein a primary component of the food product is a starch.
(Item 25)
   The food product of any one of items 22 to 24, which is a sugar restricted food product.
(Item 26)
   The food product of any one of items 22 to 25, which is a low calorie food product.
(Item 27)
   Use of the distarch phosphate of any one of items 1 to 9 for supplementing dietary fiber in a food product.
(Item 28)
   Use of the distarch phosphate of any one of items 1 to 9 for manufacturing a sugar restricted food product.
(Item 29)
   Use of the distarch phosphate of any one of items 1 to 9 for manufacturing a low calorie food product.
(Item 30)
   Use of the distarch phosphate of any one of items 1 to 9 for use as a substitute for a native starch or a modified starch other than a distarch phosphate.
(Item 31)
   Use of the distarch phosphate of any one of items 1 to 9 for use as a substitute for a wheat derived distarch phosphate.
(Item 32)
   Use of the distarch phosphate of any one of items 1 to 9 for manufacturing a dietary fiber supplemented food product without diminishing texture or flavor of a food product, wherein the distarch phosphate improves texture or flavor when a food product is manufactured using the distarch phosphate compared to a food product manufactured using a wheat derived distarch phosphate.
(Item 33)
   Use of the distarch phosphate of any one of items 1 to 9 for use in a food product comprising a carbohydrate as a primary component as a substitute for at least some of the carbohydrate.
(Item 33A)
   Use of any one of items 27 to 33, further comprising a feature of one or more of items 1 to 26.
(Item 34)
   A method for supplementing dietary fiber in a food product or an ingredient of a food product, comprising adding to the food product or the ingredient of food product:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight.
(Item 35) A method for manufacturing a sugar restricted food product, comprising admixing an ingredient of a food product with:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight.
(Item 36)
   A method for manufacturing a low calorie food product, comprising mixing an ingredient of a food product with:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight.
(Item 37)
   A method of using:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight;
      as a substitute for a native starch or a modified starch other than a distarch phosphate, comprising mixing the substitute with an ingredient of a food product free of a native starch or a modified starch other than a distarch phosphate.
(Item 38)
   A method of using:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight;
      as a substitute for a wheat derived distarch phosphate, comprising mixing the substitute with an ingredient of a food product free of a wheat derived distarch phosphate.
(Item 39)
   A method for manufacturing a dietary fiber supplemented food product without diminishing texture or flavor of a food product, wherein the method uses:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight; and
      texture or flavor is improved when a food product is manufactured by the method compared to a food product manufactured using a wheat derived distarch phosphate.
(Item 40)
   A method of using:
   (A) a distarch phosphate obtained by applying phosphate crosslinking treatment on a raw material starch, wherein
      a gelatinization.starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight;
      in a food product comprising a carbohydrate as a primary component as a substitute for at least some of the carbohydrate.
(Item 40A)
   The method of any one of items 34 to 40, further comprising a feature of one or more of items 1 to 26.
(Item 41)
   A distarch phosphate, wherein
   about 70% or more of the distarch phosphate has a particle size of 18 to 35 µm based on volume, and
   dietary fiber content in the distarch phosphate is about 50% or greater based on weight, and wherein the distarch phosphate has at least one of the following properties:
   a) a suppressed gelatinization characteristic;
   b) shearing resistance;
   c) acid resistance;
   d) suppressed thermal swellability; and
   e) indigestibility.
(Item 41A)
   A distarch phosphate, wherein
   about 70% or more of the distarch phosphate has a particle size of 18 to 35 µm based on volume, and
   dietary fiber content in the distarch phosphate is about 50% or greater based on weight, and wherein the distarch phosphate has at least one of the following properties:
   a) a viscosity increasing starting temperature, when the distarch phosphate is suspended in water so that the distarch phosphate would be 25% by weight on a dry basis, increases 4% or more than a viscosity increase starting temperature of a raw material starch;
   b) shearing resistance;
   c) acid resistance;
   d) an increase in swelling due to heating is suppressed 85% or more compared to that of a raw material starch; and
   e) indigestibility.
(Item 42)
   A dietary fiber supplementing composition, comprising the distarch phosphate of item 41.
(Item 43)
   A composition comprising the distarch phosphate of item 41, for manufacturing a sugar restricted food product.
(Item 44)
   A composition comprising the phosphoric crosslinked starch of item 41, for manufacturing a low calorie food product.
(Item 45)
   A composition comprising the phosphoric crosslinked starch of item 41, for use as a substitute for a native starch or a modified starch other than a distarch phosphate.
(Item 46)
   A composition comprising the phosphoric crosslinked starch of item 41, for use as a substitute for a wheat derived distarch phosphate.
(Item 47)
   A composition for manufacturing a dietary fiber supplemented food product without diminishing texture or flavor of a food product, wherein the composition comprises the distarch phosphate of item 41, and wherein texture or flavor is improved when a food product is manufactured using the composition compared to a food product manufactured using a wheat derived distarch phosphate.
(Item 48)
   A composition comprising the phosphoric crosslinked starch of item 41, for use in a food product comprising a carbohydrate as a primary component as a substitute for at least some of the carbohydrate.
(Item 49)
   A method for manufacturing the distarch phosphate of item 41 or the composition of any one of items 42 to 47, the method comprising:
   forming a distarch phosphate by applying phosphate crosslinking on the raw material starch or the leguminous plant starch in the presence of a phosphate crosslinker and a salt.
(Item 50)
   The method of item 49, wherein the phosphate crosslinker is selected from the group consisting of sodium trimetaphosphate and phosphorus oxychloride.
(Item 51)
   The method of item 49 or 50, wherein the salt is selected from the group consisting of sodium chloride and sodium sulfate.
(Item 52)
   The method of any one of items 49 to 51, wherein the forming the distarch phosphate comprises mixing the raw material starch or the leguminous plant starch with water to adjust a pH to from about 9 to about 12.
(Item 53)
   The method of item 52, wherein the pH is a pH of about 10.5 to about 11.5.
(Item 54)
   A food product manufactured by using the distarch phosphate of item 41.
(Item 55)
   The food product of item 54, wherein the food product is a baked confectionary, bread, or noodles.
(Item 56)
   The food product of item 54 or 55, wherein a primary component of the food product is a starch.
(Item 57)
   The food product of any one of items 54 to 56, which is a sugar restricted food product.
(Item 58)
   The food product of any one of items 54 to 57, which is a low calorie food product.
(Item 59)
   Use of the distarch phosphate of item 41 for supplementing dietary fiber in a food product.
(Item 60)
   Use of the distarch phosphate of item 41 for manufacturing a sugar restricted food product.
(Item 61)
   Use of the distarch phosphate of item 41 for manufacturing a low calorie food product.
(Item 62)
   Use of the distarch phosphate of item 41 for use as a substitute for a native starch or a modified starch other than a distarch phosphate.
(Item 63)
   Use of the distarch phosphate of item 41 for use as a substitute for a wheat derived distarch phosphate.
(Item 64)
   Use of the distarch phosphate of item 41 for manufacturing a dietary fiber supplemented food product without diminishing texture or flavor of a food product, wherein the distarch phosphate improves texture or flavor when a food product is manufactured using the distarch phosphate compared to a food product manufactured using a wheat derived distarch phosphate.
(Item 65)
   Use of the distarch phosphate of item 41 for use in a food product comprising a carbohydrate as a primary component as a substitute for at least some of the carbohydrate.
(Item 65A)
   Use of any one of items 59 to 65, further comprising a feature of one or more of items 41 to 58.
(Item 66)
   A method for supplementing dietary fiber in a food product or an ingredient of a food product, comprising adding to the food product or the ingredient of food product:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight.
(Item 67)
   A method for manufacturing a sugar restricted food product, comprising admixing an ingredient of a food product with:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight.
(Item 68)
   A method for manufacturing a low calorie food product, comprising mixing an ingredient of a food product with:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight.
(Item 69)
   A method of using:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight;
      as a substitute for a native starch or a modified starch other than a distarch phosphate, comprising mixing the substitute with an ingredient of a food product free of a native starch or a modified starch other than a distarch phosphate.
(Item 70)
   A method of using:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature- is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight;
      as a substitute for a wheat derived distarch phosphate, comprising mixing the substitute with an ingredient of a food product free of a wheat derived distarch phosphate.
(Item 71)
   A method for manufacturing a dietary fiber supplemented food product without diminishing texture or flavor of a food product, wherein the method uses:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight, and texture or flavor is improved when a food product is manufactured by the method compared to a food product manufactured using a wheat derived distarch phosphate.
(Item 72)
   A method of using:
   (A) a distarch phosphate obtained by applying phosphate crosslinking treatment on a raw material starch, wherein
      a gelatinization starting temperature is about 80°C or lower in RVA viscosity measurement when the raw material starch is suspended in water so that the raw material starch would be 7% by weight on a dry basis,
      about 70% or more of the distarch phosphate has a particle size of 18 to 35 µm based on volume, and
      dietary fiber content in the distarch phosphate is about 50% or greater based on weight;
   (B) a distarch phosphate obtained by applying phosphate crosslinking treatment on a raw material starch, wherein
      about 70% or more of the raw material starch has a particle size of 18 to 35 µm based on volume,
      a gelatinization starting temperature is about 80°C or lower in RVA viscosity measurement when the raw material starch is suspended in water so that the raw material starch would be 7% by weight on a dry basis, and
      dietary fiber content in the distarch phosphate is about 50% or greater based on weight;
   (C) a distarch phosphate obtained by applying phosphate crosslinking treatment on a leguminous plant starch, wherein
      dietary fiber content in the distarch phosphate is about 50% or greater based on weight; or
   (D) a distarch phosphate obtained by applying phosphate crosslinking treatment on a leguminous plant starch, wherein
      about 70% or more of the distarch phosphate has a particle size of 18 to 35 µm based on volume, and
      dietary fiber content in the distarch phosphate is about 50% or greater based on weight;
      in a food product comprising a carbohydrate as a primary component as a substitute for at least some of the carbohydrate.
(Item 73)
   The method of any one of items 66 to 72, further comprising a feature of one or more of items 41 to 58.

The present invention is intended so that one or more of the features described above can be provided not only as the explicitly disclosed combinations, but also as other combinations thereof. Additional embodiments and advantages of the invention are recognized by those skilled in the art by reading and understanding the following detailed description as needed.

### [Advantageous Effects of Invention]

The present invention can provide a distarch phosphate with high dietary fiber content and phosphorus content suitable for use in food products. Furthermore, the distarch phosphate of the invention can provide improvement in texture and flavor, which could not be achieved when using a wheat distarch phosphate. Therefore, the distarch phosphate of the invention can be used as a substitute for a conventional dietary fiber ingredient. Since the distarch phosphate of the invention has high dietary fiber content, the starch can be used in the manufacture of a sugar restricted food product or low calorie food product. Moreover, the distarch phosphate of the invention can be considered as "food product" under the Food Sanitation Act of Japan and relevant laws in other countries.

### [Brief Description of Drawings]

[Figure 1] Figure **1** is a graph showing the viscosity curves measured by RVA for two types of distarch phosphates (Example 1 and Comparative Example 24) prepared in accordance with the descriptions in Example F.
[Figure 2] Figure **2** is a diagram showing microscopic images of starch particles when heating two types of distarch phosphates (Example 1 and Comparative Example 24) prepared in accordance with the descriptions in Example F.
[Figure 3] Figure **3** is a graph showing the viscosity curves measured by RVA for two types of raw material starches (pea raw material starch without acetylation treatment and pea raw material with acetylation treatment) prepared in accordance with the descriptions in Example H.

### [Description of Embodiments]

The present invention is described hereinafter while showing the best mode of the invention. Throughout the entire specification, a singular expression should be understood as encompassing the concept thereof in the plural form, unless specifically noted otherwise. Thus, singular articles (e.g., "a", "an", "the", and the like in the case of English) should also be understood as encompassing the concept thereof in the- plural form, unless specifically noted otherwise. The terms used herein should also be understood as being used in the meaning that is commonly used in the art, unless specifically noted otherwise. Thus, unless defined otherwise, all terminologies and scientific technical terms that are used herein have the same meaning as the general understanding of those skilled in the art to which the present invention pertains. In case of a contradiction, the present specification (including the definitions) takes precedence.

As used herein, the term "particle size distribution" is an indicator indicating the ratio of particles with a specific particle size contained in a group of sample particles subjected to measurement. When used in the context of "particle size distribution", "%" indicates the amount of particles each particle size segment in the range of particles sizes to be measured divided based on volume. The particle size distribution is measured herein in a wet, volume based distribution using a laser diffraction particle size analyzer (SALD-2200) (Shimadzu). "Particle size" is calculated herein based on a volume of a sphere exhibiting the same measurement value as particle subjected to measurement. As used herein, "mean particle size" is computed by dividing a particle size distribution into several segments based on particle size, finding the means value of particle sizes in each segment based on numbers, and converting the result thereof into a mean value based on numbers in units of µm. In other words, the mean particle size is a number average value.

Plants store starch particles within amyloplasts as granules (i.e., as large crystals). Starch particles are bound to each other by a hydrogen bond or the like within the granules of starch. For this reason, a starch is hardly dissolved in water or digested in its original form. If a starch is heated with water, the starch swells and the molecules are loosened to take a colloidal form. Such a change is known as "gelatinization". The particle size and form of a starch vary depending on the plant from which the starch has been obtained. In the present invention, a commercially available starch can be used. A raw material starch can be prepared by a method such as purification of a starch from a plant or the like and used in the present invention.

As used herein, the term "gelatinization starting temperature" refers to a temperature measured by using a Rapid Visco Analyzer (RVA) available from Perten Instruments or the like. A gelatinization starting temperature refers to a temperature at which the viscosity reaches 50 mPa·s after stirring a slurry of starch suspended in water so that the starch would be 5 to 25% by weight on a dry basis while raising the temperature from 35°C to 95°C in 8 to 12 minutes and starting the measurement. As used herein, the term "maximum viscosity of an RVA viscosity" is the maximum viscosity on a viscosity curve when a starch is suspended in water at a given concentration, and the starch is heated and gelatinized for 1 to 20 minutes from RVA. If there is an excessive amount of starch in a starch slurry, measurement using RVA would be impossible, so that the weight ratio of a starch to water in a starch slurry is appropriately adjusted by those skilled in the art. A gelatinization starting temperature can increased by applying phosphate crosslinking treatment on a starch. It is known that changes in the gelatinization starting temperature and maximum viscosity affect the property of resisting aging (gelatinized starch gel undergoing a phenomenon such as syneresis/hardening) (aging resistance) and degradability (raw starch is readily degraded by a digestive enzyme) of a starch. It is understood that a low temperature gelatinizing starch is preferable as a starch for food products due to such starches exhibiting aging resistance and high degradability.

"Degree of swelling" as used herein is a value representing the extent of swelling of a particle when a raw material starch or a distarch phosphate is heated in the presence of water. For example, a degree of swelling can be measured by the following method:
a) stirring/heating 2 g of a raw material starch or distarch phosphate with 70 g of water in a thermostatic vessel at 85°C for 5 minutes; and
b) pouring in the product generated in step a into a 100 ml graduated cylinder, filling the cylinder to 100 ml, and incubating the solution overnight, and reading the scale.

The volume of precipitated starch layer in step b divided by the weight of raw material starch or distarch phosphate (mL/g) is the degree of swelling. A smaller value of degree of swelling indicates greater suppression of swelling of starch particles.

In the present invention, "modified starch" refers to a starch applied with treatment ("modification" herein) other than a step of preparing a starch from a plant or the like. Examples of modified starches include, but are not limited to, esterified, etherified, or oxidized starches or starches obtained from combining these reactions (e.g., starch acetate, phosphorylated starch, hydroxypropyl starch, acetylated distarch adipate, starch sodium octenylsuccinate, oxidized starch, acetylated oxidized starch, distarch phosphate, acetylated distarch phosphate, phosphated distarch phosphate, hydroxypropylated distarch phosphate, sodium starch glycolate starch, sodium starch phosphate starch, and the like), starches applied with chemical treatment such as bleaching or acid treatment, starches applied with physical treatment such as heat treated starches or heat-moisture treated starches, and enzyme treated starches such as enzyme degraded starches treated with an enzyme such as amylase. A modified starch is not particularly limited, as long as it can be used for food products. As used herein, "modified starch other than a distarch phosphate" includes starches subjected to any modification other than phosphate crosslinking (including crosslinking with further treatment such as hydroxypropylated phosphate crosslinking) among those described above.

In the present invention, "native starch" refers to a starch other than modified starches.

As used herein, "raw material starch" refers to any starch that can be a raw material for manufacturing a distarch -phosphate. Both a modified starch and a native starch can be used as a raw material starch. A raw material starch is not particularly limited as long as the starch can be used for food products. A native starch, a starch without phosphate crosslinking treatment, a distarch phosphate with a low degree of crosslinking, and leguminous plant starch are preferably used as a raw material starch. Thus, native starches as well as modified starches without phosphate crosslinking treatment (e.g., starch acetate, phosphorylated starch, hydroxypropyl starch, acetylated distarch adipate, starch sodium octenylsuccinate, oxidized starch, acetylated oxidized starch, bleached starch, and the like), distarch phosphates with a low degree of crosslinking (e.g., distarch phosphate, acetylated distarch phosphate, acetylated distarch adipate, phosphated distarch phosphate, hydroxypropylated distarch phosphate, and the like), and leguminous plant starches can also be used as a raw material starch. Starches that have not been subjected to chemical treatment or physical treatment are preferable.

As used herein, "distarch phosphate" refers to a starch that can be manufactured by applying phosphate crosslinking treatment on a raw material starch. Phosphate crosslinking changes or improves the original structure of physical property of a raw material starch to impart functionality. Phosphate crosslinking treatment crosslinks a glucose residue of a starch with a crosslinker. Examples of crosslinkers used in phosphate crosslinking treatment include sodium trimetaphosphate or phosphorus oxychloride.

As used herein, "distarch phosphate with a low degree of crosslinking" refers to distarch phosphates with dietary fiber content of 10% or less based on weight. Examples of starches subjected to phosphate crosslinking treatment include distarch phosphate, acetylated distarch phosphate, aceylated distarch adipate, phosphated distarch phosphate, hydroxypropylated distarch phosphate, and the like.

As used herein, "dietary fiber" refers to those quantified by Prosky's method (AOAC 985.29). As used herein, "dietary fiber content" is indicated by the ratio of the weight of dietary fiber to the weight of raw material starch or distarch phosphate. The "dietary fiber content", when mentioned herein, is indicated in terms of percentage based on weight, unless defined otherwise. As used herein, "high dietary fiber content" refers to dietary fiber content in a raw material starch or distarch phosphate of 50% or greater, preferably 60% or greater, 70% or greater, 80% or greater, 90% or greater, 95% or greater, 96% or greater, 97% or greater, 98% or greater, or 99% or greater, based on weight.

As used herein, the term "phosphorus content" refers to a value measured by the molybdenum yellow method specified in the Japan's Specifications and Standards for Food Additives. Specifically, phosphorus is quantified by converting a sample starch into ashes with a high temperature then reacting and coloring phosphorus with an ammonium molybdate reagent and vanadic acid reagent to measure the absorbance. In some embodiments, the amount of phosphorus contained in the distarch phosphate of the invention is 0.5% or less based on weight. In some embodiments, the amount of phosphorus contained in the distarch phosphate of the invention is 0.1% or less based on weight.

As used herein, "leguminous plant starch" refers to a starch obtained from a leguminous plant. When a starch is obtained from a leguminous plant, the starch can be obtained from seeds, bulb, or the like of a leguminous plant. Examples of leguminous plants include pea, mung bean, lentil (Lens culinaris), kidney bean, chickpea, pinto bean, broad bean, withered bean, pigeon pea, adzuki bean, black-eyed pea, runner bean, and the like. In the present invention, a leguminous plant is preferably selected from a pea and mung bean. Most preferably, peas are used.

As used herein, "food product comprising a carbohydrate as a primary component" refers to a food product with a carbohydrate accounting for the highest ratio in dry weight excluding moisture. "Carbohydrate" consists of sugar and dietary fiber, i.e., carbohydrate is considered a generic term for sugar and dietary fiber, and sugar can be considered as carbohydrate excluding dietary fiber. Major sugars include starch, which is one type of polysaccharides. Sugar is ingested into the body, digested/absorbed, and functions as the primary energy source. Therefore, a low calorie food product (i.e., food product with reduced energy source) can be obtained by reducing sugar contained in a food product. Examples of nutrients that can be an energy source for the body include carbohydrates as well as proteins and lipids. Food products comprising a carbohydrate as a primary component include, but are not limited to, rice, bread, noodles, baked confectionaries, and the like.

As used herein, "suppressed gelatinization characteristic" refers to a characteristic of gelatinization of a starch being suppressed. "Gelatinization characteristic" as used herein is typically measured using a rheometer (Anton Parr), and determined by measuring the temperature when the viscosity reaches 10 mPa·s after starting measurement while treating a slurry of starch suspended in water so that the start would be 25% by weight on a dry basis at a shearing rate of 100 s⁻¹ and increasing the temperature from 35°C to 95°C for 5 minutes. "Suppressed gelatinization characteristic", when mentioned herein, refers to the viscosity increase starting temperature, when the distarch phosphate of the invention is suspended in water so that the starch would be 25% by weight on a dry basis, being increased by 4% or more than the viscosity increase starting temperature of a raw material starch. In some embodiments, the viscosity increase starting temperature, when the distarch phosphate of the invention is suspended in water so that the distarch phosphate of the invention would be 25% by weight on a dry basis, is increased 4% or greater, 8% or greater, 10% or greater, 12% or greater, 16% or greater, 20% or greater, preferably 4% to 64%, or 12% to 42% compared to that of a raw material starch.

As used herein, "shearing resistance" is an index indicating the stability of a starch under high shearing conditions. For the "shearing resistance" used herein, those skilled in the art can determine a suitable value of "shearing resistance" through suitable measurement by referring to the description in the entire specification.

As used herein, "acid resistance" is an index indicating stability of a starch under acidic conditions. For "acid resistance" used herein, those skilled in the art can determine a suitable value of "acid resistance" through suitable measurement by referring to the description in the entire specification.

As used herein, "suppressed thermal swellability" refers to an increase in the degree of swelling of a starch due to heating being suppressed. The "suppressed thermal swellability" as used herein is typically measured by the following method. Specifically, 2 g of a starch on a dry basis is stirred/heated with 70 g of water in a thermostatic vessel at 85°C for 5 minutes, and the product thereof is poured into a 100 ml graduated cylinder, the cylinder is filled to 100 ml, the solution is incubated overnight, and the scale is read out. The volume of the precipitated starch layer is then divided by the weight of the starch to calculate the degree of swelling (mL/g) of the starch. The "suppressed thermal swellability" is calculated by comparing the degree of swelling of a distarch phosphate and the degree of swelling of a raw material starch. In some embodiments, thermal swellability is suppressed 20% or more, 30% or more, 40% or more, 50% or more, 60% or more, 70% or more, 80% or more, preferably 85% or more for the distarch phosphate of the invention compared to a raw material starch. This can reach up to 93% or less.

As used herein, "indigestibility" refers to a characteristic of lower digestion/absorption compared to a raw material starch. "Indigestibility" as used herein can be typically measured by Prosky's method and AOAC 2002.02 and other methods known to those skilled in the art. For the "indigestibility" of the invention, those skilled in the art can determined a suitable value of "indigestibility" through suitable measurement by referring to the description in the entire specification. In some embodiments, the distarch phosphate of the invention can be observed to have 50% or more reduced digestibility compared to a raw material starch.

### Raw material starch

70% or more of starch used as a raw material starch of the invention has a particle size of 18 to 35 µm based on volume, and the starch has a gelatinization starting temperature of 80°C or lower when the raw material starch is suspended in water so that the raw material starch would be 7% by weight on a dry basis. Although not wishing to be bound by any theory, it is understood that use of a starch with such a particle size distribution nullifies diminished texture due to phosphate crosslinking treatment of a raw material starch as well as deterioration in texture and flavor. Examples of raw material starches compliant with such a particle size distribution and gelatinization starting temperature include, but are not limited to, leguminous plant starches, preferably pea starches, mung bean starches, and the like.

When using a pea or mung bean raw material starch in the present invention, the raw material starches can be obtained from a commercially available supply source. Commercially available pea and mung bean derived raw material starches all had a particle size of 18 to 35 µm based on volume in 70% for more of the raw material starches, and a gelatinization starting temperature of 80°C or lower when the raw material starch is suspended in water so that the raw material starch would be 7% by weight on a dry basis, to the extent inspected by the Applicant, thus satisfying the particle size distribution and gelatinization starting temperature according to the invention. In another embodiment, a pea or mung bean starch can be manufactured by pulverizing a pea or mung bean seed and concentrating the starch fraction. Pulverization of pea or mung bean seeds and concentration of starch fractions are performed by a common approach of those skilled in the art. Raw material starches manufactured by the approach described above can be further sieved or purified so that 70% or more has a particle size of 18 to 35 µm based on volume. A more specific manufacturing method can be appropriately adjusted by those skilled in the art.

As the raw material starch of the invention, both a modified starch and a native starch can be used. There is no particular limitation as long as the starch is a starch that can be used for food products. In a certain aspect, a starch used as the raw material starch of the invention can be a native starch. In another aspect, a starch used as the raw material starch of the invention can be a modified starch. Unlike native starches, the gelatinization starting temperature may not satisfy the conditions to be used in the present invention for a modified starch in some cases, even if the gelatinization starting temperature satisfies the conditions to be used in the present invention for a corresponding native starch. Those skilled in the art understand that the modified starch cannot be used as a raw material in such a case. In a preferred embodiment, the raw material starch of the invention can be a native starch or a starch applied with treatment other than phosphate crosslinking treatment. Examples of starches applied with treatment other than phosphate crosslinking treatment include starches manufactured by applying chemical treatment, physical treatment, or enzymatic treatment. Examples of chemically treated starches include starch acetate, phosphorylated starch, hydroxypropyl starch, starch sodium octenylsuccinate, oxidized starch, acetylated oxidized starch, bleached starch, and the like. Examples of physically treated starches include heat treated starches, heat-moisture treated starches, and the like. Examples of enzyme treated starches include enzyme degraded starches treated with an enzyme such as amylase. In still another aspect, a distarch phosphate with a low degree of crosslinking can be used as a starch used as the raw material starch of the invention. Examples of distarch phosphates with a low degree of crosslinking include simple distarch phosphates as well as acetylated distarch phosphate, acetylated distarch adipate, phosphated distarch phosphate, hydroxypropylated distarch phosphate, and the like. In still another aspect, a starch used as the raw material starch of the invention is a leguminous plant starch. Examples of leguminous plant starches include native starches derived from a pea, mung bean, lentil (Lens culinaris), kidney bean, chickpea, pinto bean, broad bean, withered bean, pigeon pea, adzuki bean, black-eyed pea, runner bean, or the like and modified starches thereof.

### Distarch phosphate

The distarch phosphate of the invention is obtained by applying phosphate crosslinking treatment on a raw material starch or a leguminous plant starch. In one aspect, the distarch phosphate of the invention is a distarch phosphate obtained by applying phosphate crosslinking treatment on a raw material starch, wherein a gelatinization starting temperature is about 80°C or lower in RVA viscosity measurement when the raw material starch is suspended in water so that the raw material starch would be 7% by weight on a dry basis, about 70% or more of the distarch phosphate has a particle size of 18 to 35 µm based on volume, and dietary fiber content in the distarch phosphate is about 50% or greater based on weight. In another aspect, the distarch phosphate of the invention is a distarch phosphate obtained by applying phosphate crosslinking treatment on a raw material starch, wherein about 70% or more of the raw material starch has a particle size of 18 to 35 µm based on volume, a gelatinization starting temperature is about 80°C or lower in RVA viscosity measurement when the raw material starch is suspended in water so that the raw material starch would be 7% by weight on a dry basis, and dietary fiber content in the distarch phosphate is about 50% or greater based on weight. In another aspect, the distarch phosphate of the invention is a distarch phosphate of a leguminous plant starch, wherein dietary fiber content in the distarch phosphate is about 50% or greater based on weight. In another aspect, the distarch phosphate of the invention is a distarch phosphate of a leguminous plant starch, wherein about 70% or more of the distarch phosphate has a particle size of 18 to 35 µm based on volume, and dietary fiber content in the distarch phosphate is about 50% or greater based on weight. The distarch phosphate of the invention has hydroxyl groups within or between starch molecules crosslinked by phosphate crosslinking treatment so that gelatinization is suppressed and excellent shearing resistant and acid resistant properties are imparted. A distarch phosphate gradually becomes indigestibly as crosslinking is increased, and swelling due to heating is suppressed and a human digestive enzyme no longer functions. Therefore, a distarch phosphate with an increased degree of crosslinking has increased dietary fiber content. The means of phosphate crosslinking treatment used in the present invention is not limited, as long as the means is within the scope provided in the Food Sanitation Act of Japan.

### Method of manufacturing distarch phosphate

The distarch phosphate of the invention is manufactured by reacting a raw material starch with a crosslinker and a salt in the presence of water while maintaining a predetermined pH/temperature. Specifically, the distarch phosphate of the invention is manufactured by a method comprising:
(a) mixing water with a raw material starch with a gelatinization starting temperature of 80°C or lower when the raw material starch is suspended in water so that the raw material starch would be 7% by weight on a dry basis; and
(b) stirring the product of step (a) in the presence of sodium trimetaphosphate or phosphorus oxychloride, and sodium sulfate or sodium chloride so that dietary fiber content in the distarch phosphate is 50% or greater based on weight. The raw material starch described above can be manufactured from a plant, or a commercially available starch can be used. The raw material starch used in step (a) preferably has a particle size of 18 to 35 µm based on volume in 70% or more of the starch. The amount of water in step (a) is preferably an amount at which the concentration of the raw material starch in the product of step (a) is 30 to 45% by weight. In a more preferred embodiment, the amount of water in step (a) is an amount at which the concentration of the raw material starch in the product of step (a) is 38 to 42% by weight.

In some embodiments, step (a) further comprises adjusting a pH of a mixture of a raw material starch and water. The step of adjusting the pH adds an alkaline agent such as sodium hydroxide, calcium hydroxide, or sodium carbonate to adjust the pH to a pH of 8 to 12, preferably 9 to 11.5. A pH of less than 8 is problematic in that a phosphate crosslinking reaction is not likely to occur. A pH greater than 12 is problematic in that a raw material starch is alkalinically gelatinized.

In some embodiments, the product of step (a) is heated to 10 to 50°C and stirred for 10 minutes to 30 hours in step (b). The temperature upon stirring is 10 to 50°C, preferably 20 to 50°C, more preferably 30 to 50°C, and still more preferably 40 to 50°C. The time of stirring is 10 minutes to 30 hours, preferably 1 hour to 28 hours, and more preferably 15 hours to 25 hours. In general, a temperature upon stirring at less than 10°C is problematic in that the efficiency of a phosphate crosslinking reaction is reduced and cooling is costly. A temperature greater than 50°C is problematic in that the efficiency of a phosphate crosslinking reaction is reduced.

As a crosslinker in a method of manufacturing a distarch phosphate of the invention, sodium trimetaphosphate or phosphorus oxychloride designated in "Standards and criteria for food and food additives, etc." provided in the Food Sanitation Act of Japan can be used. In some embodiments, the amount of sodium trimetaphosphate added in step (b) is 1 to 10% with respect to the weight of a raw material starch. The amount of sodium trimetaphosphate can be in any range between 1 to 10%. Examples of the lower limit thereof include 1%, 1.5%, 2%, 2.5%, 3%, 3.5%, 4%, 4.5%, 5%, 5.5%, 6%, and the like, and examples of the upper limit thereof include 10%, 9.5%, 9%, 8.5%, 8%, 7.5%, 7%, 6.5%, 6%, and the like. It is understood that such upper limit and lower limit values can be appropriately combined. The phosphate crosslinking treatment of the invention nullifies deterioration in texture or flavor that can result in the process of phosphate crosslinking of a wheat starch or the like. In an embodiment using phosphorus oxychloride as a substitute of sodium trimetaphosphate, the amount of phosphorus oxychloride added in step (b) is 0.01 to 5% with respect to the weight of a raw material starch.

The detailed conditions of the step wherein "dietary fiber content in the distarch phosphate is 50% or greater based on weight" in a method of manufacturing a distarch phosphate of the invention are appropriately adjusted by those skilled in the art. Specifically, the conditions can be adjusted by adjusting the amount of water in step (a) or pH of the product of step (a), adjusting the amount of sodium trimetaphosphate or phosphorus oxychloride or sodium sulfate or sodium chloride in step (b), adjusting the stirring time or temperature upon stirring, or the like. In a preferred embodiment, the amount of water mixed with a raw material starch in the distarch phosphate of the invention is an amount at which the concentration of the raw material starch in the product of step (a) would be 8 to 42% by weight. The pH of the product is then adjusted to 9 to 11.5 and then 5 to 9% sodium trimetaphosphate based on weight of the raw material starch is added and the mixture is stirred for 15 to 25 hours at 40 to 50°C. In this regard, dietary fiber content in the distarch phosphate can be 60% or greater, 70% or greater, 80% or greater, 90% or greater, 95% or greater, 98% or greater, or 99% or greater based on weight. In such a case, this can be materialized by adjusting the amount of water in step (a) or pH of the product of step (a), adjusting the amount of sodium trimetaphosphate or phosphorus oxychloride or sodium sulfate or sodium chloride in step (b), or further matching one or more of the stirring time and temperature upon stirring to a preferred condition.

### Use of distarch phosphate

The distarch phosphate of the invention can be used in the manufacture of food products. As used herein, "food product" has the meaning that is commonly used in the art and refers to all food (including beverages) that can be consumed by humans. In one embodiment, examples of food products include processed items. For example, the distarch phosphate of the invention can be added to processed food products such as confectionaries, dairy products, and processed grain items. The distarch phosphate of the invention is particularly useful for a food product requiring a suitable resilience, powderishness, or flavor. A food product manufactured using the distarch phosphate of the invention is preferably, but not limited to, baked confectionary, bread, or noodles.

In one embodiment, the distarch phosphate of the invention is used for manufacturing a sugar restricted food product. Sugar is a component that does not fall under any of protein, lipid, mineral, dietary fiber, or moisture in a food product. A sugar restricted food product restricts intake of sugar contained in staple food such as rice or bread, vegetables, or the like. While there is no clear specification for the amount of sugar that can be contained in sugar restricted food products, it is advocated that the daily total sugar be restricted to within 110 to 140 g. Although not wishing to be bound by any theory, since dietary fiber accounts for 50% or more of the weight of the distarch phosphate of the invention, the distarch phosphate has low sugar content and is thus useful for manufacturing a sugar restricted food product.

In one embodiment, the distarch phosphate of the invention is used in manufacturing a dietary fiber supplemented food product. A dietary fiber supplemented food product is a food product effectively using the dietary fiber supplementing composition of the invention. Examples of particularly preferred food products include solid food products that can be boiled in hot water such as noodles, bread and baked confectionaries that are cooked at a high temperature, and the like.

In one embodiment, the distarch phosphate of the invention is used for manufacturing a low calorie food product. A low calorie food product refers to a food product with 40 kcal or more of energy reduced per 100 g of food product with respect to a comparable food product based on nutrition labeling standards. A food product manufactured using the distarch phosphate of the invention is intended as a food product complying with such specification. A low calorie food product manufactured using the distarch phosphate of the invention is preferably a food product with the vast majority of calories (i.e., energy source) of the food product from carbohydrates, or a food product with more calories of the food product from carbohydrates than from lipids or proteins.

In one embodiment, the distarch phosphate of the invention is used as at least a partial substitute of carbohydrate in a food product comprising a carbohydrate. In a preferred embodiment, the distarch phosphate of the invention is used as a substitute for wheat in a food product with a primary component of wheat such as bread, noodles, or baked confectionary. The distarch phosphate of the invention is also used in a food product with a raw material starch or a distarch phosphate as a primary component as a substitute for the raw material starch or modified starch other than a distarch phosphate, or as a substitute for a wheat distarch phosphate. In this embodiment, the distarch phosphate of the invention can be used alone or as a combination with a conventional raw material starch or distarch phosphate. Examples of the conventional raw material starch or distarch phosphate include raw material starches obtained from plants such as corn, wheat, rice, potato, tapioca, sweet potato, or sago, and distarch phosphates thereof.

A food product manufactured using the distarch phosphate of the invention can be manufactured by an approach that is routine to those skilled in the art by using the distarch phosphate of the invention in place of a conventional distarch phosphate. The food product of the invention can comprise a conventional starch in addition to the distarch phosphate of the invention. More specific manufacturing methods are appropriately adjusted by those skilled in the art.

### [Examples]

### (Example A) Preparation of distarch phosphate

The raw material starches used in the Examples were obtained from the following suppliers: Sanwa Starch Co., Ltd., Nagata Group Holdings, Ltd., Joetsu Starch Co., Ltd., JA Kiyosatocho, JA Kagoshima Kimotsuki, Emsland Group (DE), Long Kow Foods (China), THAI WAH (Thailand), Ubon (Malaysia), and PT National Starch (Indonesia). A slurry adjusted to pH of 11.0 was prepared by adding water so that the weight of anhydrous raw material starch would be 40%. 6% sodium trimetaphosphate and 10% sodium sulfate with respect to the weight of the raw material starch were added thereto. The mixture was stirred while heating to 46°C. After 20 hours of reaction while maintaining a pH of 11.0, the reactant was neutralized with hydrochloric acid, washed with water, dehydrated, and dried to obtain a distarch phosphate.

The 9 types of starches shown in Table 1A were used as raw material starches. The gelatinization starting temperature of raw material starches was a temperature when the raw material starch was suspended in water so that the raw material starch would be 7% by weight on a dry basis.

### [Table 1A]

**Table 1A**

| Sample No. | Raw material starch | Ratio (%) of particle size of 18 µm to 35 µm | Gelatinization starting temperature (°C) |
|---|---|---|---|
| 1 | Pea starch | 85.0 | 73.3 |
| 2 | Mung bean starch | 78.6 | 68.9 |
| 3 | Corn starch | 31.8 | 80.3 |
| 4 | Wheat starch | 57.9 | 87.3 |
| 5 | Rice starch (nonglutinous rice) | 0.0 | 72.8 |
| 6 | Potato starch | 30.6 | 62.2 |
| 7 | Tapioca starch | 38.8 | 66.3 |
| 8 | Sweet potato starch | 27.3 | 75.6 |
| 9 | Sago starch | 50.3 | 78.1 |

Distarch phosphates were obtained by applying phosphate crosslinking treatment on the 9 types of raw material starches shown in Table 1A. The particle size distribution was also measured for the distarch phosphates. Table 1B shows the ratio of starch particles within the range of particle size of 18 to 35 µm among the distarch phosphates.

### [Table 1B]

**Table 1B**

| Sample No. | Modified starch | Ratio (%) of particle size of 18 µm to 35 µm |
|---|---|---|
| 1 | Pea starch | 81.5 |
| 2 | Mung bean starch | 78.5 |
| 3 | Corn starch | 30.8 |
| 4 | Wheat starch | 57.0 |
| 5 | Rice starch (nonglutinous rice) | 0.0 |
| 6 | Potato starch | 33.0 |
| 7 | Tapioca starch | 35.1 |
| 8 | Sweet potato starch | 27.4 |
| 9 | Sago starch | 47.5 |

As is apparent from comparing Table 1A with Table 1B, there is no significant change in the ratio of starch particles within the range of particle size of 18 to 35 µm before and after phosphate crosslinking treatment.

Crosslinking treatment was applied to the 9 types of raw material starches shown in Table 1B. The dietary fiber content was measured based on Prosky's method, and phosphorus content was measured based on molybdenum yellow method (Table 2) .

### [Table 2]

**Table 2**

| | | Sample No. | Raw material starch | Dietary fiber content (%) | Phosphorus content (%) |
|---|---|---|---|---|---|
| Examples | 1 | 1 | Pea starch | 99.5 | 0.45 |
| | 2 | 2 | Mungbean starch | 98.4 | 0.38 |
| Comparative Examples | 1 | 3 | Corn starch | 75.1 | - |
| | 2 | 4 | Wheat starch | 90.4 | 0.39 |
| | 3 | 5 | Rice starch (nonglutinous rice) | 12.9 | - |
| | 4 | 6 | Potato starch | 99.2 | 0.50 |
| | 5 | 7 | Tapioca starch | 89.7 | 0.37 |
| | 6 | 8 | Sweet potato starch | 95.7 | 0.44 |
| | 7 | 9 | Sago starch | 86.8 | - |

Distarch phosphates with particularly high dietary fiber content of 90% or greater from Table 2 were 6 distarch phosphates of Example 1 (pea starch), Example 2 (mung bean starch), Comparative Example 2 (wheat starch), Comparative Example 4 (potato starch), Comparative Example 5 (tapioca starch), and Comparative Example 6 (sweet potato starch).

Sensory evaluation was conducted after using these 6 types of distarch phosphates to prepare noodles, bread roles, and cookies.

Sensory evaluation was conducted by a well-trained panel of 5 members. Three evaluation categories were provided for each food product. For noodles, resilience, powderishness, and flavor, and for bread roles and cookies, crispness, powderishness, and flavor were graded by 5 levels of points in accordance with the following criteria, and the mean thereof was found.
5 points: very desirable as a food product
4 points: desirable as a food product
3 points: no problem as a food product
2 points: not too desirable as a food product
1 point: not desirable as a food product

Overall evaluation was conducted by judging the 3 evaluation categories as a whole for each food product in accordance with the following criteria.
5 points: very desirable; 3 evaluation categories are all 3.5 points or higher
4 points: desirable; three evaluation categories are all 3.0 points or higher and less than 3.5 points
3 points: no problem; three evaluation categories are all 2.5 points or higher, and the category with the lowest points is 2.5 points or higher and less than 3.0
2 points: not too desirable; at least one of the 3 evaluation categories is 1.5 points or higher and less than 2.5 points
1 point: not desirable; at least one of the 3 evaluation categories is 1.0 point or higher and less than 1.5 points.

### (Example B) Preparation of cookies

Cookies were prepared in accordance with the following procedure with the recipe shown in Table 3. First, margarine was kneaded until it was creamy, and granulated sugar and eggs were added and mixed, then pre-sifted soft flour, distarch phosphate, cocoa powder, and salt were added and mixed. Milk was added to lump the cookie dough, which was placed in a bag and refrigerated overnight in a refrigerator. The dough was then stretched in a sheet-like shape with a thickness of 1 cm, cut into a size of 1.5 cm x 5 cm, and baked for 15 minutes in a 170°C oven.

### [Table 3]

**Table 3**

| Raw material (parts by mass) | Example 3 | Example 4 | Comparative Example 8 | Comparative Example 9 | Comparative Example 10 | Comparative Example 11 |
|---|---|---|---|---|---|---|
| Hard flour | 50 | 50 | 50 | 50 | 50 | 50 |
| Starch of Example 1 | 50 | - | - | - | - | - |
| Starch of Example 2 | - | 50 | - | - | - | - |
| Starch of Comparative Example 2 | - | - | 50 | - | - | - |
| Starch of Comparative Example 4 | - | - | - | 50 | - | - |
| Starch of Comparative Example 5 | - | - | - | - | 50 | - |
| Starch of Comparative Example 6 | - | - | - | - | - | 50 |
| Margarine | 50 | 50 | 50 | 50 | 50 | 50 |
| Granulated sugar | 25 | 25 | 25 | 25 | 25 | 25 |
| Egg | 10 | 10 | 10 | 10 | 10 | 10 |
| Cocoa powder | 5 | 5 | 5 | 5 | 5 | 5 |
| salt | 0.5 | 0.5 | 0.5 | 0.5 | 0.5 | 0.5 |
| Milk | 20 | 20 | 20 | 20 | 20 | 20 |

Table 4 shows results of sensory evaluation of cookies. Examples 3 and 4 had desirable texture/flavor as cookies, with 3.0 points or higher in all three evaluation categories. In particular, Example 3 using a pea starch as a raw material had an overall evaluation of 5 points and better texture/flavor compared to Example 4 using a mung bean starch as a raw material. Comparative Example 8 using a wheat starch as a raw material had 3.0 points or higher in crispiness and powderishness, but very poor flavor with a sensation of an off-taste such as bitterness or astringency, so that the overall evaluation was 1 point. It is suggested that a starch with a gelatinization starting temperature of 80°C or higher when the raw material starch is suspended in water so that the raw material starch would be 7% by weight on a dry basis can have a significantly adverse effect on flavor. To the extent inspected by the. Applicant, all of the wheat derived starches have a gelatinization starting temperature of 80°C or higher when the raw material starch is suspended in water so that the raw material starch would be 7% by weight on a dry basis and are thus understood as failing to meet the criteria for flavor.

### [Table 4]

**Table 4**

| Evaluation category | Example 3 | Example 4 | Comparative Example 8 | Comparative Example 9 | Comparative Example 10 | Comparative Example 11 |
|---|---|---|---|---|---|---|
| Crispiness | 4.6 | 4.0 | 3.6 | 4.0 | 2.6 | 2.4 |
| Powderishness | 3.9 | 3.0 | 3.0 | 2.8 | 1.4 | 2.6 |
| Flavor | 3.9 | 3.2 | 1.4 | 2.4 | 2.6 | 2.8 |
| Overall evaluation | 5 | 4 | 1 | 3 | 1 | 2 |

### (Example C) Preparation of bread roll by straight dough method

Bread rolls were prepared in accordance with the following procedure with the recipe shown in Table 5. Dough raw materials other than margarine were added to a bread making mixer and mixed for 10 minutes. Margarine was added thereto, and the dough was mixed for another 8 minutes and subjected to primary fermentation for 70 minutes at 27°C. The bread dough was divided into 50 g per clump. After 15 minutes of bench rest, the dough was subjected to the final fermentation for 35 minutes at 38°C. The bread dough after the final fermentation was baked for 14 minutes in an oven set to top heat 200°C/bottom heat 160°C.

### [Table 5]

**Table 5**

| Raw material (parts by mass) | Example 5 | Example 6 | Comparative Example 12 | Comparative Example 13 | Comparative Example 14 | Comparative Example 15 |
|---|---|---|---|---|---|---|
| Hard flour | 48.5 | 48.5 | 48.5 | 48.5 | 48.5 | 48.5 |
| Starch of Example 1 | 50 | - | - | - | - | - |
| Starch of Example 2 | - | 50 | - | - | - | - |
| Starch of Comparative Example 2 | - | - | 50 | - | - | - |
| Starch of Comparative Example 4 | - | - | - | 50 | - | - |
| Starch of Comparative Exemple 5 | - | - | - | - | 50 | - |
| Starch of Comparative Example 6 | - | - | - | - | - | 50 |
| Gluten | 1.5 | 1.5 | 1.5 | 1.5 | 1.5 | 1.5 |
| Alginic acid | 0.5 | 0.5 | 0.5 | 0.5 | 0.5 | 0.5 |
| Raw yeast | 2 | 2 | 2 | 2 | 2 | 2 |
| Yeast food | 0.1 | 0.1 | 0.1 | 0.1 | 0.1 | 0.1 |
| Caster sugar | 12 | 12 | 12 | 12 | 12 | 12 |
| Salt | 1.8 | 1.8 | 1.8 | 1.8 | 1.8 | 1.8 |
| Skin milk powder | 3 | 3 | 3 | 3 | 3 | 3 |
| Margarine | 12 | 12 | 12 | 12 | 12 | 12 |
| Water | 68 | 68 | 68 | 68 | 68 | 68 |

Table 6 shows the results of sensory evaluation of bread rolls. Just as with cookies, Examples 5 and 6 had desirable texture/flavor as bread rolls, with 3.0 points or higher in all three evaluation categories. In particular, Example 5 using a pea starch as a raw material had an overall evaluation of 5 points and better texture/flavor compared to Example 6 using a mung bean starch as a raw material. Comparative Example 12 using a wheat starch as a raw material had 3.0 points or higher in crispiness and powderishness, but very poor flavor, so that the overall evaluation was 1 point.

### [Table 6]

**Table 6**

| Evaluation category | Example 5 | Example 6 | Comparative Example 12 | Comparative Example 13 | Comparative Example 14 | Comparative Exmple 15 |
|---|---|---|---|---|---|---|
| Crispiness | 4.0 | 3.6 | 3.4 | 3.4 | 3.2 | 2.8 |
| Powdarishnes | 3.6 | 3.0 | 3.0 | 2.7 | 1.5 | 1.4 |
| Flavor | 3.5 | 3.2 | 1.4 | 2.6 | 2.6 | 2.8 |
| Overal evaluation | 5 | 4 | 1 | 2 | 2 | 1 |

### (Example D) Preparation of udon

Udon was prepared in accordance with the following procedure with the recipe shown in Table 7. Medium strength flour and 6 types of distarch phosphates were mixed, salt water was added, and the mixture was mixed for 3 minutes at high speed and 8 minutes at low speed in a mixer. This was stretched to a thickness of 3 mm with a rolling mill to prepare udon with a #15 cutting blade. Quick-frozen udon boiled for 6 minutes in boiling water without thawing, cooled in ice water, and then strained was evaluated.

### [Table 7]

**Table 7**

| Raw material (parts by mass) | Example 7 | Example 8 | Comparative Example 16 | Comparative Example 17 | Comparative Example 18 | Comparative Example 19 |
|---|---|---|---|---|---|---|
| Medium strength flour | 66 | 66 | 66 | 66 | 66 | 66 |
| Starch of Example 1 | 50 | - | - | - | - | - |
| Starch of Example 2 | - | 50 | - | - | - | - |
| Starch of Comparative Example 2 | - | - | 50 | - | - | - |
| Starch of Comparative Example 4 | - | - | - | 50 | - | - |
| Starch of Comparative Example 5 | - | - | - | - | 50 | - |
| Starch of Comparative Example 6 | - | - | - | - | - | 50 |
| Gluten | 10 | 10 | 10 | 10 | 10 | 10 |
| Alginic acid | 0.2 | 0.2 | 0.2 | 0.2 | 0.2 | 0.2 |
| Salt | 4 | 4 | 4 | 4 | 4 | 4 |
| Water | 45 | 45 | 45 | 45 | 45 | 45 |

Table 8 shows results of sensory evaluation of udon. Just as with bread and cookies, Examples 7 and 8 had desirable texture/flavor as udon, with 3.0 points or higher in all three evaluation categories. In particular, Example 7 using a pea starch as a raw material had an overall evaluation of 5 points and better texture/flavor compared to Example 8 using a mung bean starch as a raw material. The noodles of Examples 7 and 8 had a whiter color compared to Comparative Examples 16 to 19 and properties preferable as udon in terms of the outer appearance.

### [Table 8]

**Table 8**

| Evaluation category | Example 7 | Example 8 | Comparative Example 16 | Comparative Example 17 | Comparative Example 18 | Comparative Example 19 |
|---|---|---|---|---|---|---|
| Resilience | 3.5 | 3.0 | 3.2 | 2.0 | 3.0 | 2.2 |
| Powderishness | 4.2 | 4.0 | 4.0 | 2.4 | 2.8 | 2.4 |
| Flavor | 3.5 | 3.0 | 2.0 | 2.4 | 2.6 | 2.4 |
| Overall evaluation | 5 | 4 | 2 | 2 | 3 | 2 |

### (Example E) Measurement with taste sensor

To objectively evaluate flavor, a taste sensor (Intelligent Sensor Technology TS-5000Z) was used to analyze the taste of cookies prepared by mixing a distarch phosphate and a glutinized solution of distarch phosphate.

A teste sensor is an apparatus for quantifying taste by measuring a potential that changes when a taste substance adsorbs onto an artificial lipid membrane. A measured sample needs to be a solute dispersed liquid, with lipids removed from the sample.

Since bitterness and astringency were mentioned as poor flavor in sensory evaluation of food products using a distarch phosphate, the numerical values were compared while focusing on "bitter unpleasant taste", i.e., the taste that precedes bitterness, "bitterness", which is the aftertaste, and "astringency" which is the aftertaste of astringency.

### Preparation of a measurement sample (glutinized solution"

5% starch slurries prepared by measuring out 10 g of distarch phosphates of Example 1, Example 2, Comparative Example 2, and Comparative Examples 4 to 6 on a dry basis, and adding distilled water so that the total volume would be 200 g were heated and stirred for 15 minutes at 95°C. The supernatant obtained by centrifugation at 2000 g for 5 minutes was used as the measurement sample.

Table 9 shows results of analyzing a glutinized solution with a taste sensor. While a difference in astringency was not found in the 6 types of glutinized solutions, bitter unpleasant taste/bitterness was the weakest for the pea starch of Example 1 and strongest for the wheat starch of Comparative Example 2. This was correlated with the results of sensory evaluation.

### [Table 9]

**Table 9**

| | Bitter unpleasant taste | Bitterness | Astringency |
|---|---|---|---|
| Example 1 | -4.77 | -0.84 | -0.03 |
| Example 2 | -3.29 | -0.48 | -0.09 |
| Comparative Example 2 | 0.01 | -0.19 | -0.02 |
| Comparative Example 4 | -2.38 | -0.27 | -0.08 |
| Comparative Example 5 | -3.63 | -0.53 | -0.12 |
| Comparative Example 6 | -3.44 | -0.10 | -0.16 |

### Preparation of measurement sample (cookie)

Cookies were prepared in accordance with the following procedure with the recipe shown in Table 10. First, butter was mixed until it was creamy, and further mixed after adding granulated sugar. Whole eggs were also added and mixed. Sifted wheat was added, and the ingredients were lumped together. After stretching the cookie dough to a thickness of 5 mm, the dough was cut out with a ϕ 5cm cookie cutter and baked for 14 minutes in a 170°C oven. Three baked cookies were crushed and mixed for 1 minute with 40°C water at the amount of 5-fold of the cookie weight. After dispensing the solution into a centrifugal tube and incubating the tube for 10 minutes in ice water, the tube was centrifuged for 10 minutes at 2000 g. After removing oil content from the supernatant, the solution was filtered to prepare a measurement sample.

### [Table 10]

**Table 10**

| | **Example 9** | **Example 10** | **Comparative Example 20** | **Comparative Example 21** | **Comparative Example 22** | **Comparative Example 23** |
|---|---|---|---|---|---|---|
| **Wheat** | **70** | **70** | **70** | **70** | **70** | **70** |
| **Starch of Example 1** | **50** | **-** | **-** | **-** | **-** | **-** |
| **Starch of Example 2** | **-** | **50** | **-** | **-** | **-** | **-** |
| **Starch of Comparative Example 2** | **-** | **-** | **50** | **-** | **-** | **-** |
| **Starch of Comparative Example 4** | **-** | **-** | **-** | **50** | **-** | **-** |
| **Starch of Comparative Example 5** | **-** | **-** | **-** | **-** | **50** | **-** |
| **Starch of Comparative Example 6** | **-** | **-** | **-** | **-** | **-** | **50** |
| **Salt-free butter** | **50** | **50** | **50** | **50** | **50** | **50** |
| **Granulated sugar** | **40** | **40** | **40** | **40** | **40** | **40** |
| **Whole egg** | **25** | **25** | **25** | **25** | **25** | **25** |

Table 11 shows results of analyzing a measurement sample of cookie solution with a taste sensor. While a difference in bitterness or astringency was not found in Examples 9 and 10 and Comparative Examples 20 to 23, bitter unpleasant taste was the weakest in Example 9 comprising a pea distarch phosphate as a raw material and strongest in Comparative Example 20 comprising a wheat distarch phosphate as a raw material. This was correlated with the results of sensory evaluation.

### [Table 11]

**Table 11**

| **Sample name** | **Bitter unpleasant taste** | **Bitterness** | **Astringency** |
|---|---|---|---|
| **Example 9** | **-0.36** | **-0.50** | **-0.05** |
| **Example 10** | **0.12** | **-0.43** | **-0.04** |
| **Comparative Example 20** | **0.48** | **-0.57** | **-0.02** |
| **Comparative Example 21** | **0.43** | **-0.55** | **-0.06** |
| **Comparative Example 22** | **0.01** | **-0.63** | **-0.05** |
| **Comparative Example 23** | **-0.11** | **-0.54** | **-0.07** |

### (Example F) Comparison with pea distarch phosphate from a different manufacturing method

The physical properties of the distarch phosphate of the invention were analyzed with respect to the degree of swelling and dietary fiber content. The distarch phosphate of the invention was prepared according to Example A (Example 1). As a target of comparsion, a distarch phosphate (Comparative Example 24) was prepared by the following manufacturing method.

### Preparation of distarch phosphate (Comparative Example 24)

100 parts of sodium sulfate and 5 parts of sodium hydroxide were added and dissolved in 1300 parts of water. While stirring the mixture, 1000 parts of raw material pea starch were added and 1 part of sodium trimetaphosphate was added and reacted for 15 hours at 40°C. After neutralization, washing with water, dehydration, drying, and refining, a pea distarch phosphate was obtained (Comparative Example 24).

### RVA viscosity measurement

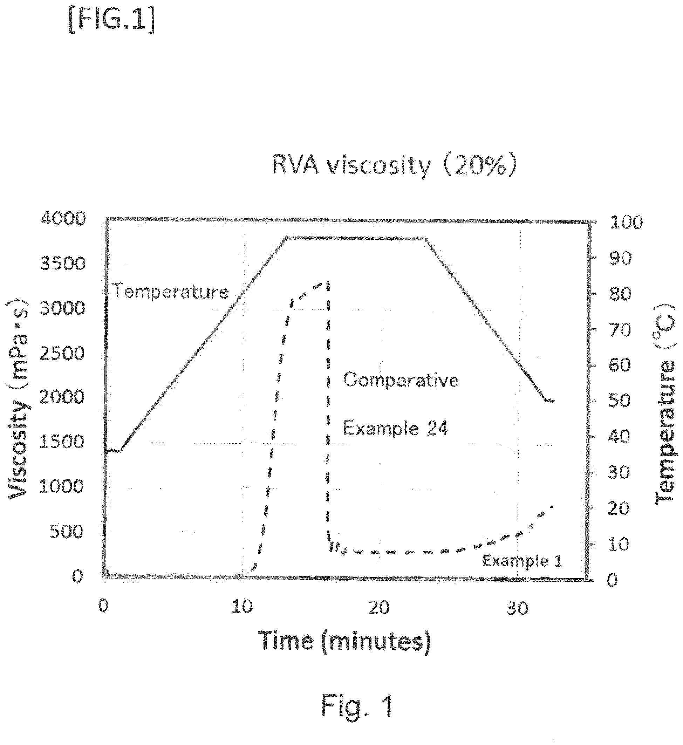

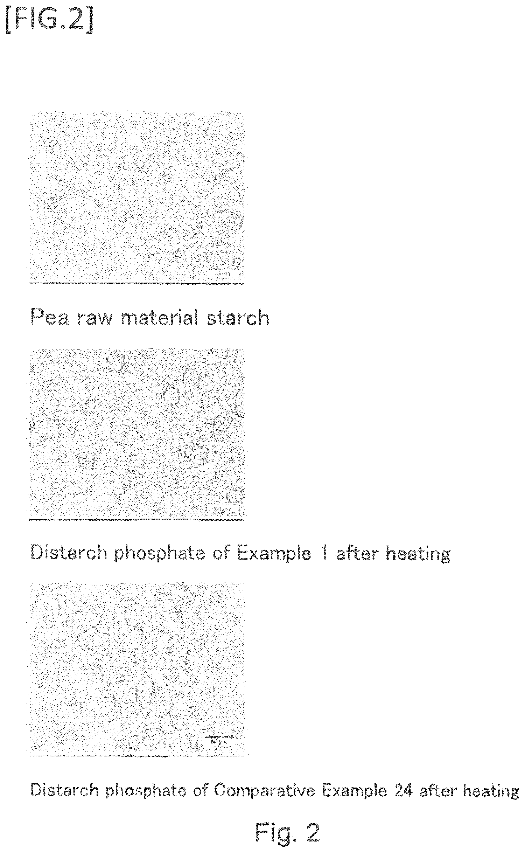

The distarch phosphate of Example 1 and the distarch phosphate of Comparative Example 24 were each mixed with water so that the starch would be 20% by weight on a dry basis. Slurries of the distarch phosphates were heated while stirring from 35°C to 95°C, incubated for 10 minutes, and then cooled. The behavior of viscosity during this period was measured using Rapid Visco Analyzer (RVA). The results are shown in Figure 1 as viscosity curves measured by RVA. Figure 2 shows the microscopic images of starch particles at the time.

As is apparent from Figure 1, expression of viscosity was not found in the distarch phosphate of Example 1, but expression of viscosity was found in the distarch phosphate of Comparative Example 24. Furthermore, in view of the results of microscopic images in Figure 2, a significant difference in the starch particle size is not found in the starch of Example 1, whereas the starch particle is found to be larger and swollen in the starch of Comparative Example 24.

### Measurement of degree of swelling

2 g of each of the distarch phosphates of Example 1 and Comparative Example 24 were mixed with 70 g of water and stirred for 5 minutes at 85°C. These starch slurries were poured into a 100 ml graduated cylinder, the cylinder was filled up to 100 ml, the solution was incubated overnight, and the scale was read out. Table 12 shows the results thereof.

### [Table 12]

**Table 12 Volume of precipitated starch layer**

| | **Example 1** | **Comparative Example 24** |
|---|---|---|
| **Volume of starch layer** | **7 ml** | **10 ml** |

It was revealed from the results of Table 12 that the degree of swelling of the distarch phosphate of Example 1 was 3.5 ml/g, and the degree of swelling of the distarch phosphate of Comparative Example 24 was 5 ml/g. It was found from the results that the distarch phosphate of Example 1 has a lower degree of swelling than the distarch phosphate of Comparative Example 24.

### Measurement of dietary fiber content

The dietary fiber content of the distarch phosphates of Example 1 and Comparative Example 24 was compared. The dietary fiber content was measured by the Prosky's method in the same manner as Example A. While the dietary fiber content of the distarch phosphate of Example 1 was 99.5% as shown in Table 2, the dietary fiber content of the distarch phosphate of Comparative Example 24 was 8.9%. Thus, the distarch phosphate of Comparative Example 24 was found to be unsuitable as a dietary fiber supplementing composition.

### (Example G) Sensory evaluation when using classified peas

A pea distarch phosphate with about 70% or more of the distarch phosphate having a particle size of 18 to 35 µm based on volume (pea distarch phosphate) and a pea distarch phosphate with a biased density that does not satisfy the aforementioned particle size distribution (classified pea distarch phosphate) were prepared. The particle size distribution and mean particle size of these distarch phosphates were measured in a wet, volume based distribution using a laser diffraction particle size analyzer (SALD-2200) (Shimadzu). The results are described in Table 13.

### [Table 13]

**Table 13 Particle size distribution and mean particle size**

| | **Pea distarch phosphate** | **Classified pea distarch phosphate** |
|---|---|---|
| **Ratio (%) of particle size of 18 µm to 35 µm** | **81.5** | **46.4** |
| **Mean particle size (µm)** | **27.8** | **17** |

Sensory evaluation was conducted by manufacturing bread rolls using these distarch phosphates. Bread rolls were manufactured as described in Example C. Evaluation of texture of bread rolls was conducted by a panel of four members, focusing on powderishness, and graded by 5 levels, with texture that is not powderish as 5 points.

Table 14 shows the sensory evaluation of bread rolls. The points indicate the mean value of the points from four panel members. It was revealed from the results thereof that phosphate crosslinked peas have improved texture in terms of powderishness compared to classified phosphate crosslinked peas. This result suggests correlation between the particle size distribution and texture, and suggests that distarch phosphates with the particle size distribution according to the present invention attain a better effect than those of other particle size distributions.

### [Table 14]

**Table 14 Evaluation of powderishness of bread roll**

| | **Pea distarch phosphate** | **Classified pea distarch phosphate** |
|---|---|---|
| **Powderishness points** | **3.5** | **3** |

### (Example H)

### Effect of chemical treatment other than phosphate crosslinking treatment on viscosity of starch

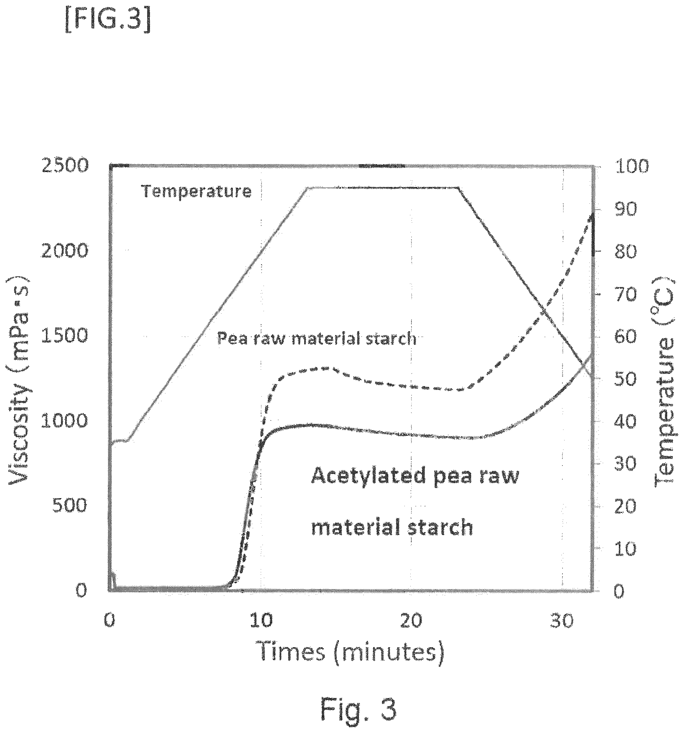

To demonstrate that a raw material starch subjected to treatment other than phosphate crosslinking treatment can also be used as a raw material starch, a modified starch was tested as to whether the requirement of the invention is met. As the modified starch, acetylated pea raw material starch was used. As the acetylated pea raw material starch, CLEARAM LG0005 (Roquette, France) was used. Two types of starches, i.e., pea raw material starch without acetylation treatment (pea raw material starch) and pea raw material starch with acetylation treatment (acetylated pea raw material starch), were prepared, which were each mixed with water so that the starch would be 7% by weight on a dry basis. Slurries of these raw material starches were heated while stirring from 35°C to 95°C, incubated for 10 minutes, and then cooled. The behavior of viscosity during this period was measured using Rapid Visco Analyzer (RVA). The results are shown in Figure 3 as viscosity curves measured by RVA.

It was revealed in view of the results of Example H shown in Figure 3 that the gelatinization starting temperatures of a pea raw material starch without acetylation treatment and pea raw material starch with acetylation treatment were 72°C and 71°C, respectively. Thus, it was found that the pea raw material starch with acetylation treatment satisfies the requirement of "80°C or lower in RVA viscosity measurement" according to the present invention. The results suggest that a raw material starch subjected to treatment other than phosphate crosslinking treatment can also be used as the raw material starch in the present invention.

As disclosed above, the present invention is exemplified by the use of its preferred embodiments. However, the present invention should not be interpreted to be limited to such embodiments. It is understood that the scope of the present invention should be interpreted based solely on the Claims. It is understood that an equivalent scope can be practiced by those skilled in the art based on the descriptions of the invention and common general knowledge from the specific descriptions in the preferred embodiments of the invention. It is also understood that any patent, any patent application, and any references cited herein should be incorporated herein by reference in the same manner as the contents are specifically described herein. The present application claims priority to Japanese Patent Application No. 2018-30094 filed on February 22, 2018 in Japan. It is understood that the entire content thereof is incorporated herein by reference.

### [Industrial Applicability]

The present invention is useful in terms of providing a distarch phosphate with high dietary fiber content and phosphorus content suitable for use in food products.

## Claims

1. A distarch phosphate obtained by applying phosphate crosslinking treatment on a raw material starch, wherein
a gelatinization starting temperature is about 80°C or lower in RVA viscosity measurement when the raw material starch is suspended in water so that the raw material starch would be 7% by weight on a dry basis,
about 70% or more of the distarch phosphate has a particle size of 18 to 35 µm based on volume, and
dietary fiber content in the distarch phosphate is about 50% or greater based on weight.

2. A distarch phosphate obtained by applying phosphate crosslinking treatment on a raw material starch, wherein
about 70% or more of the raw material starch has a particle size of 18 to 35 µm based on volume,
a gelatinization starting temperature is about 80°C or lower in RVA viscosity measurement when the raw material starch is suspended in water so that the raw material starch would be 7% by weight on a dry basis, and
dietary fiber content in the distarch phosphate is about 50% or greater based on weight.

3. The distarch phosphate of claim 1 or 2, wherein the raw material starch is obtained from a leguminous plant.

4. A distarch phosphate obtained by applying phosphate crosslinking treatment on a leguminous plant starch, wherein
dietary fiber content in the distarch phosphate is about 50% or greater based on weight.

5. A distarch phosphate obtained by applying phosphate crosslinking treatment on a leguminous plant starch, wherein
about 70% or more of the distarch phosphate has a particle size of 18 to 35 µm based on volume, and
dietary fiber content in the distarch phosphate is about 50% or greater based on weight.

6. The distarch phosphate of any one of claims 1 to 5, wherein the raw material starch or the leguminous plant starch is obtained from a pea or a mung bean.

7. The distarch phosphate of any one of claims 1 to 6, wherein phosphorus content of the distarch phosphate by weight is about 0.5% or less.

8. The distarch phosphate of any one of claims 1 to 7, wherein phosphorus content of the distarch phosphate by weight is about 0.1% or greater.

9. The distarch phosphate of any one of claims 1 to 8, wherein a maximum viscosity of an RVA viscosity is about 200 mPa·s or less when the raw material starch is suspended in water so that the raw material starch would be 25% by weight on a dry basis.

10. A dietary fiber supplementing composition comprising the distarch phosphate of any one of claims 1 to 9.

11. A composition comprising the distarch phosphate of any one of claims 1 to 9, for manufacturing a sugar restricted food product.

12. A composition comprising the distarch phosphate of any one of claims 1 to 9, for manufacturing a low calorie food product.

13. A composition comprising the distarch phosphate of any one of claims 1 to 9, for use as a substitute for a native starch or a modified starch other than a distarch phosphate.

14. A composition comprising the distarch phosphate of any one of claims 1 to 9, for use as a substitute for a wheat derived distarch phosphate.

15. A composition for manufacturing a dietary fiber supplemented food product without diminishing texture or flavor of a food product, wherein the composition comprises the distarch phosphate of any one of claims 1 to 9, and wherein texture or flavor is improved when a food product is manufactured using the composition compared to a food product manufactured using a wheat derived distarch phosphate.

16. A composition comprising the distarch phosphate of any one of claims 1 to 9 for use in a food product comprising a carbohydrate as a primary component as a substitute for at least some of the carbohydrate.

17. A method for manufacturing the distarch phosphate of any one of claims 1 to 9 or the composition of any one of claims 10 to 15, the method comprising forming a distarch phosphate by phosphate crosslinking of the raw material starch or the leguminous plant starch in the presence of a phosphate crosslinker and a salt.

18. The method of claim 17, wherein the phosphate crosslinker is selected from the group consisting of sodium trimetaphosphate and phosphorus oxychloride.

19. The method of claim 17 or 18, wherein the salt is selected from the group consisting of sodium chloride and sodium sulfate.

20. The method of any one of claims 17 to 19, wherein the forming the distarch phosphate comprises mixing the raw material starch or the leguminous plant starch with water to adjust a pH of the mixture to from about 9 to about 12.

21. The method of claim 20, wherein the pH is a pH of about 10.5 to about 11.5.

22. A food product manufactured by using the distarch phosphate of any one of claims 1 to 9.

23. The food product of claim 22, wherein the food product is a baked confectionary, bread, or noodles.

24. The food product of claim 22 or 23, wherein a primary component of the food product is a starch.

25. The food product of any one of claims 22 to 24, which is a sugar restricted food product.

26. The food product of any one of claims 22 to 25, which is a low calorie food product.

27. Use of the distarch phosphate of any one of claims 1 to 9 for supplementing dietary fiber in a food product.

28. Use of the distarch phosphate of any one of claims 1 to 9 for manufacturing a sugar restricted food product.

29. Use of the distarch phosphate of any one of claims 1 to 9 for manufacturing a low calorie food product.

30. Use of the distarch phosphate of any one of claims 1 to 9 for use as a substitute for a native starch or a modified starch other than a distarch phosphate.

31. Use of the distarch phosphate of any one of claims 1 to 9 for use as a substitute for a wheat derived distarch phosphate.

32. Use of the distarch phosphate of any one of claims 1 to 9 for manufacturing a dietary fiber supplemented food product without diminishing texture or flavor of a food product, wherein the distarch phosphate improves texture or flavor when a food product is manufactured using the distarch phosphate compared to a food product manufactured using a wheat derived distarch phosphate.

33. Use of the distarch phosphate of any one of claims 1 to 9 for use in a food product comprising a carbohydrate as a primary component as a substitute for at least some of the carbohydrate.

34. A method for supplementing dietary fiber in a food product or an ingredient of a food product, comprising adding to the food product or the ingredient of food product:
(A) a distarch phosphate obtained by applying phosphate crosslinking treatment on a raw material starch, wherein
a gelatinization starting temperature is about 80°C or lower in RVA viscosity measurement when the raw material starch is suspended in water so that the raw material starch would be 7% by weight on a dry basis,
about 70% or more of the distarch phosphate has a particle size of 18 to 35 µm based on volume, and
dietary fiber content in the distarch phosphate is about 50% or greater based on weight;
(B) a distarch phosphate obtained by applying phosphate crosslinking treatment on a raw material starch, wherein
about 70% or more of the raw material starch has a particle size of 18 to 35 µm based on volume,
a gelatinization starting temperature is about 80°C or lower in RVA viscosity measurement when the raw material starch is suspended in water so that the raw material starch would be 7% by weight on a dry basis, and
dietary fiber content in the distarch phosphate is about 50% or greater based on weight;
(C) a distarch phosphate obtained by applying phosphate crosslinking treatment on a leguminous plant starch, wherein
dietary fiber content in the distarch phosphate is about 50% or greater based on weight; or
(D) a distarch phosphate obtained by applying phosphate crosslinking treatment on a leguminous plant starch, wherein
about 70% or more of the distarch phosphate has a particle size of 18 to 35 µm based on volume, and
dietary fiber content in the distarch phosphate is about 50% or greater based on weight.

35. A method for manufacturing a sugar restricted food product, comprising admixing an ingredient of a food product with:
(A) a distarch phosphate obtained by applying phosphate crosslinking treatment on a raw material starch, wherein
a gelatinization starting temperature is about 80°C or lower in RVA viscosity measurement when the raw material starch is suspended in water so that the raw material starch would be 7% by weight on a dry basis,
about 70% or more of the distarch phosphate has a particle size of 18 to 35 µm based on volume, and
dietary fiber content in the distarch phosphate is about 50% or greater based on weight;
(B) a distarch phosphate obtained by applying phosphate crosslinking treatment on a raw material starch, wherein
about 70% or more of the raw material starch has a particle size of 18 to 35 µm based on volume,
a gelatinization starting temperature is about 80°C or lower in RVA viscosity measurement when the raw material starch is suspended in water so that the raw material starch would be 7% by weight on a dry basis, and
dietary fiber content in the distarch phosphate is about 50% or greater based on weight;
(C) a distarch phosphate obtained by applying phosphate crosslinking treatment on a leguminous plant starch, wherein
dietary fiber content in the distarch phosphate is about 50% or greater based on weight; or
(D) a distarch phosphate obtained by applying phosphate crosslinking treatment on a leguminous plant starch, wherein
about 70% or more of the distarch phosphate has a particle size of 18 to 35 µm based on volume, and
dietary fiber content in the distarch phosphate is about 50% or greater based on weight.

36. A method for manufacturing a low calorie food product, comprising mixing an ingredient of a food product with:
(A) a distarch phosphate obtained by applying phosphate crosslinking treatment on a raw material starch, wherein
a gelatinization starting temperature is about 80°C or lower in RVA viscosity measurement when the raw material starch is suspended in water so that the raw material starch would be 7% by weight on a dry basis,
about 70% or more of the distarch phosphate has a particle size of 18 to 35 µm based on volume, and
dietary fiber content in the distarch phosphate is about 50% or greater based on weight;
(B) a distarch phosphate obtained by applying phosphate crosslinking treatment on a raw material starch, wherein
about 70% or more of the raw material starch has a particle size of 18 to 35 µm based on volume,
a gelatinization starting temperature is about 80°C or lower in RVA viscosity measurement when the raw material starch is suspended in water so that the raw material starch would be 7% by weight on a dry basis, and
dietary fiber content in the distarch phosphate is about 50% or greater based on weight;
(C) a distarch phosphate obtained by applying phosphate crosslinking treatment on a leguminous plant starch, wherein
dietary fiber content in the distarch phosphate is about 50% or greater based on weight; or
(D) a distarch phosphate obtained by applying phosphate crosslinking treatment on a leguminous.plant starch, wherein
about 70% or more of the distarch phosphate has a particle size of 18 to 35 µm based on volume, and
dietary fiber content in the distarch phosphate is about 50% or greater based on weight.

37. A method of using:
(A) a distarch phosphate obtained by applying phosphate crosslinking treatment on a raw material starch, wherein
a gelatinization starting temperature is about 80°C or lower in RVA viscosity measurement when the raw material starch is suspended in water so that the raw material starch would be 7% by weight on a dry basis,
about 70% or more of the distarch phosphate has a particle size of 18 to 35 µm based on volume, and
dietary fiber content in the distarch phosphate is about 50% or greater based on weight;
(B) a distarch phosphate obtained by applying phosphate crosslinking treatment on a raw material starch, wherein
about 70% or more of the raw material starch has a particle size of 18 to 35 µm based on volume,
a gelatinization starting temperature is about 80°C or lower in RVA viscosity measurement when the raw material starch is suspended in water so that the raw material starch would be 7% by weight on a dry basis, and
dietary fiber content in the distarch phosphate is about 50% or greater based on weight;
(C) a distarch phosphate obtained by applying phosphate crosslinking treatment on a leguminous plant starch, wherein
dietary fiber content in the distarch phosphate is about 50% or greater based on weight; or (D) a distarch phosphate obtained by applying phosphate crosslinking treatment on a leguminous plant starch, wherein
about 70% or more of the distarch phosphate has a particle size of 18 to 35 µm based on volume, and
dietary fiber content in the distarch phosphate is about 50% or greater based on weight;
as a substitute for a native starch or a modified starch other than a distarch phosphate, comprising mixing the substitute with an ingredient of a food product free of a native starch or a modified starch other than a distarch phosphate.

38. A method of using:
(A) a distarch phosphate obtained by applying phosphate crosslinking treatment on a raw material starch, wherein
a gelatinization starting temperature is about 80°C or lower in RVA viscosity measurement when the raw material starch is suspended in water so that the raw material starch would be 7% by weight on a dry basis,
about 70% or more of the distarch phosphate has a particle size of 18 to 35 µm based on volume, and
dietary fiber content in the distarch phosphate is about 50% or greater based on weight;
(B) a distarch phosphate obtained by applying phosphate crosslinking treatment on a raw material starch, wherein
about 70% or more of the raw material starch has a particle size of 18 to 35 µm based on volume,
a gelatinization starting temperature is about 80°C or lower in RVA viscosity measurement when the raw material starch is suspended in water so that the raw material starch would be 7% by weight on a dry basis, and
dietary fiber content in the distarch phosphate is about 50% or greater based on weight;
(C) a distarch phosphate obtained by applying phosphate crosslinking treatment on a leguminous plant starch, wherein
dietary fiber content in the distarch phosphate is about 50% or greater based on weight; or
(D) a distarch phosphate obtained by applying phosphate crosslinking treatment on a leguminous plant starch, wherein
about 70% or more of the distarch phosphate has a particle size of 18 to 35 µm based on volume, and
dietary fiber content in the distarch phosphate is about 50% or greater based on weight;
as a substitute for a wheat derived distarch phosphate, comprising mixing the substitute with an ingredient of a food product free of a wheat derived distarch phosphate.

39. A method for manufacturing a dietary fiber supplemented food product without diminishing texture or flavor of a food product, wherein the method uses:
(A) a distarch phosphate obtained by applying phosphate crosslinking treatment on a raw material starch, wherein
a gelatinization starting temperature is about 80°C or lower in RVA viscosity measurement when the raw material starch is suspended in water so that the raw material starch would be 7% by weight on a dry basis,
about 70% or more of the distarch phosphate has a particle size of 18 to 35 µm based on volume, and
dietary fiber content in the distarch phosphate is about 50% or greater based on weight;
(B) a distarch phosphate obtained by applying phosphate crosslinking treatment on a raw material starch, wherein
about 70% or more of the raw material starch has a particle size of 18 to 35 µm based on volume,
a gelatinization starting temperature is about 80°C or lower in RVA viscosity measurement when the raw material starch is suspended in water so that the raw material starch would be 7% by weight on a dry basis, and
dietary fiber content in the distarch phosphate is about 50% or greater based on weight;
(C) a distarch phosphate obtained by applying phosphate crosslinking treatment on a leguminous plant starch, wherein
dietary fiber content in the distarch phosphate is about 50% or greater based on weight; or
(D) a distarch phosphate obtained by applying phosphate crosslinking treatment on a leguminous plant starch, wherein
about 70% or more of the distarch phosphate has a particle size of 18 to 35 µm based on volume, and
dietary fiber content in the distarch phosphate is about 50% or-greater based on weight; and
texture or flavor is improved when a food product is manufactured by the method compared to a food product manufactured using a wheat derived distarch phosphate.

40. A method of using:
(A) a distarch phosphate obtained by applying phosphate crosslinking treatment on a raw material starch, wherein
a gelatinization starting temperature is about 80°C or lower in RVA viscosity measurement when the raw material starch is suspended in water so that the raw material starch would be 7% by weight on a dry basis,
about 70% or more of the distarch phosphate has a particle size of 18 to 35 µm based on volume, and
dietary fiber content in the distarch phosphate is about 50% or greater based on weight;
(B) a distarch phosphate obtained by applying phosphate crosslinking treatment on a raw material starch, wherein
about 70% or more of the raw material starch has a particle size of 18 to 35 µm based on volume,
a gelatinization starting temperature is about 80°C or lower in RVA viscosity measurement when the raw material starch is suspended in water so that the raw material starch would be 7% by weight on a dry basis, and
dietary fiber content in the distarch phosphate is about 50% or greater based on weight;
(C) a distarch phosphate obtained by applying phosphate crosslinking treatment on a leguminous plant starch, wherein
dietary fiber content in the distarch phosphate is about 50% or greater based on weight; or
(D) a distarch phosphate obtained by applying phosphate crosslinking treatment on a leguminous plant starch, wherein
about 70% or more of the distarch phosphate has a particle size of 18 to 35 µm based on volume, and
dietary fiber content in the distarch phosphate is about 50% or greater based on weight;
in a food product comprising a carbohydrate as a primary component as a substitute for at least some of the carbohydrate.

41. A distarch phosphate, wherein
about 70% or more of the distarch phosphate has a particle size of 18 to 35 µm based on volume, and
dietary fiber content in the distarch phosphate is about 50% or greater based on weight, and wherein the distarch phosphate has at least one of the following properties:
a) a suppressed gelatinization characteristic;
b) shearing resistance;
c) acid resistance;
d) suppressed thermal swellability; and
e) indigestibility.
